# EUROPÄISCHE PATENTSCHRIFT

(11) **EP 3 221 606 B1**
(45) Veröffentlichungstag und Bekanntmachung des Hinweises auf die Patenterteilung: **12.09.2018**
(21) Anmeldenummer: 14799781.1
(22) Anmeldetag: 19.11.2014
(51) Int. Cl.: F16D 48/06, F16D 48/02

(54) **VERFAHREN ZUM BETRIEB EINER KUPPLUNG**
METHOD FOR OPERATING A CLUTCH
PROCÉDÉ PERMETTANT DE FAIRE FONCTIONNER UN EMBRAYAGE

(43) Veröffentlichungstag der Anmeldung: 27.09.2017
(73) Patentinhaber: GKN AUTOMOTIVE LTD., Redditch Worcestershire B98 0AJ (GB)
(72) Erfinder: RUITERS, Volker Rene, 53721 Siegburg (DE); LANGHANKI, Andreas, 47259 Duisburg (DE)
(74) Vertreter: Rössler, Matthias
(86) Internationale Anmeldenummer: PCT/EP2014/074958
(87) Internationale Veröffentlichungsnummer: WO 2016/078701

(56) Entgegenhaltungen:
- EP-A1- 2 233 766
- EP-A1- 2 386 774
- DE-A1- 19 857 707
- DE-A1- 19 934 853
- DE-C1- 10 137 581
- US-A1- 2010 298 089

## Beschreibung

Die vorliegende Erfindung betrifft ein Verfahren zum Betrieb einer Kupplung eines Kraftfahrzeuges.

Das Verfahren kann insbesondere in allen hydraulisch aktuierten Kupplungen eingesetzt werden. Dazu gehören Kupplungen in HangOn-Systemen (z. B. Booster), Kupplungen in TorqueVectoring-Systemen (z. B. Twinster, BMW-QMVH), Kupplungen in Disconnect-Systemen (PTU mit Reiblamellensystem), Kupplungen in Schaltgetrieben (Volvo2Speed) und Kupplungen in Sperrdifferenzialen (Quersperre in RDU).

Die Kupplung umfasst regelmäßig eine Mehrzahl von Kupplungsbelägen und eine Kupplungsfeder und ist mit einem hydraulischen Drucksystem verbunden, das zumindest eine Pumpe, einen Kupplungszylinder und einen Kupplungskolben aufweist. Insbesondere ist zwischen Pumpe und Kupplungszylinder zumindest ein Ventil vorgesehen. Das hydraulische Drucksystem ist geeignet, über die Pumpe und ggf. das Ventil eine hydraulische Flüssigkeit in den Kupplungszylinder zu fördern und den Kupplungskolben gezielt zu bewegen, so dass die Kupplungsbeläge gegen eine Kraft der Kupplungsfeder miteinander zur Anlage gebracht werden. In einem so genannten Greifpunkt der Kupplung ist ein Luftspiel überwunden und die Kupplungsbeläge sind in Anlage miteinander, wobei sich die Kraft des Kupplungskolbens und die Kraft der Kupplungsfeder gerade aufheben, so dass die Kupplungsbeläge ohne oder ohne wesentliche Anpresskraft aneinander anliegen. Ein weiteres Erhöhen des Drucks im hydraulischen Drucksystem hat dann unmittelbar eine Bereitstellung einer Drehmomentkapazität der Kupplung zur Folge, d. h. die Kupplung überträgt tatsächlich ein (vorbestimmtes) Drehmoment, z. B. von einer Antriebseinheit auf ein Getriebe.

In Kraftfahrzeugen werden vermehrt Kupplungen, wie z. B. Kupplungen in Doppelkupplungsgetrieben, verwendet, die durch eine (elektronische) Kontrolleinheit automatisch angesteuert werden. Bei einer derartigen Ansteuerung ist die genaue Kenntnis des Greifpunkts von entscheidender Bedeutung für die Qualität der Kupplungsbetätigung, insbesondere die Kenntnis über den Zeitpunkt bzw. die Situation des hydraulischen Drucksystems, bei dem der Greifpunkt vorliegt; insbesondere falls vor der tatsächlichen Übertragung eines Drehmoments von einer Antriebseinheit auf ein Getriebe bzw. auf die damit verbundenen drehbaren Komponenten eines Kraftfahrzeuges (Getriebewellen, Seitenwellen, Längswelle, usw.) ein nur geringes Drehmoment durch die Kupplung übertragen wird, so dass eine Synchronisierung der Drehzahlen (einerseits Antriebseinheitsseite, andererseits Getriebeseite) erfolgen kann. Entsprechend müssen die Kupplungsbeläge definiert zueinander angeordnet werden, so dass ein gewünschtes (geringes) Drehmoment für eine bestimmte Zeitdauer übertragen wird, bis die Synchronisierung erfolgt ist. Erst danach werden die Kupplungsbeläge über den Greifpunkt hinaus zur Anlage gebracht, so dass dann das Drehmoment der Antriebseinheit vollständig auf das Getriebe übertragen werden kann.

Um ausgehend von einer vollständig geöffneten Kupplung diesen Greifpunkt zu erreichen, muss der Kupplungszylinder mit einer hydraulischen Flüssigkeit befüllt werden. Damit dieser Befüllvorgang schnell abläuft, kann der Befülldruck (von Beginn an) auf einen hohen Wert gesetzt werden. Durch den hohen Befülldruck lässt sich im hydraulischen Drucksystem ein großer Volumenstrom einstellen, so dass der Kupplungszylinder schnell befüllt wird und der Greifpunkt, ausgehend von der geöffneten Kupplung, in kurzer Zeit erreicht wird. Jedoch besteht dabei die Gefahr, dass durch den hohen Befülldruck beim Befüllen des Kupplungszylinders der Kupplungskolben letztlich eine Kraft auf die Kupplungsbeläge ausübt, die größer als die entgegengesetzte Kraft der Kupplungsfeder ist, was dazu führt, dass die Kupplungsbeläge zwar in Anlage sind, jedoch aneinandergepresst werden, wodurch die Kupplung bereits eine Drehmomentkapazität aufweist (Greifpunkt überschritten). Dies ist jedoch für eine geregelte Betriebsweise der Kupplung, die in einem Kraftfahrzeug eingesetzt wird, unerwünscht, weil der Fahrkomfort aufgrund von Geräuschen und ruckartigen Beschleunigungen beeinträchtigt wird.

Wird hingegen ein vergleichsweise niedrigerer Befülldruck eingestellt, kann die Befüllung des Kupplungszylinders und somit das Erreichen des Greifpunktes zu viel Zeit in Anspruch nehmen, was sich in einem Kraftfahrzeug beim Schalten ebenfalls in Komforteinbußen niederschlägt oder gegebenenfalls zu fehlgeschlagenen Schaltvorgängen führen kann.

Aus der EP 1 903 240 A2 ist bereits ein Verfahren zum Erreichen eines Greifpunktes bekannt, bei dem der Befülldruck so gesteuert wird, dass ein möglichst schnelles Befüllen des Kupplungszylinders erreicht wird, wobei ein Überschreiten des Greifpunkts vermieden werden soll. Dieser Prozess wird iterativ durchgeführt, wobei der jeweils zuletzt sensorisch ermittelte Befülldruck für die Steuerung des Betriebs der Kupplung verwendet wird. Dieses Verfahren erfordert jedoch eine komplexe und damit kostenintensive Sensorik-Auswerte-Einheit, wobei durch die iterative Messung und Steuerung der Zeitraum bis zum sicheren Erreichen (aber nicht Überschreiten) des Greifpunktes relativ lang ist.

Die EP 2 233 766 A1 offenbart eine Kupplungsdrucksteuervorrichtung mit einer optimierten Steuerstrategie für den Hydraulikdruck beider Kupplungen in einem Doppelkupplungsgetriebe (DTC). Hierbei werden stationäre und dynamische Einflüsse der Kupplung, eines hydraulischen Proportionalventils und der hydraulischen Widerstände zwischen Proportionalventil und Kupplung modelliert. Die Modelle werden verwendet, um aus dem angeforderten Druck unter Berücksichtigung der Reaktionsfähigkeit des Systems einen erreichbaren Solldruck zu berechnen und zu realisieren. Es wird auch eine Füllvolumenanpassungsstrategie vorgeschlagen, bei der eine Kupplungsfüllung durchgeführt und nach dem Füllen der Sollkupplungsdruck mit einer RC-förmigen Kurve auf den angeforderten Druck eingestellt wird. Sobald der tatsächliche Kupplungsdruck einen Druck oberhalb des Greifpunkts erreicht hat, werden rechnerisch ermittelte Druckdifferenzen über ein Zeitfenster herangezogen, dass Füllvolumen anzupassen. Diese Methode erfordert eine relativ komplexe und kostenintensive Sensorik. Weiterhin erfordert diese Modellierung Zeit, so dass diese für schnelle Kupplungsänderungen nicht ausreichend geeignet ist.

Aufgabe der Erfindung ist es daher, die mit Bezug auf den Stand der Technik geschilderten Probleme zumindest teilweise zu lösen und insbesondere ein Verfahren zum Betrieb und/oder exakten Bestimmen/Einstellen und/oder Überwachen eines Greifpunktes einer Kupplung eines Kraftfahrzeuges anzugeben, das den Greifpunkt möglichst schnell erreichen lässt und das nicht den Einsatz von weiteren Komponenten notwendig macht.

Diese Aufgaben werden gelöst mit einem Verfahren gemäß den Merkmalen des Patentanspruchs 1. Weitere vorteilhafte Ausgestaltungen des Verfahrens sind in den abhängigen Patentansprüchen angegeben. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Die Erfindung betrifft ein Verfahren zum Betrieb einer Kupplung eines Kraftfahrzeugs, wobei die Kupplung eine Mehrzahl von Kupplungsbelägen und eine Kupplungsfeder aufweist und mit einem hydraulischen Drucksystem verbunden ist. Das hydraulische Drucksystem weist zumindest eine Pumpe, einen Kupplungszylinder und einen Kupplungskolben auf, wobei das hydraulische Drucksystem geeignet ist, über die Pumpe eine hydraulische Flüssigkeit (z. B. ein Öl) in den Kupplungszylinder zu fordern und den Kupplungskolben zu bewegen, so dass die Kupplungsbeläge gegen eine Kraft der Kupplungsfeder miteinander zur Anlage gebracht werden. In dem Greifpunkt der Kupplung ist ein Luftspiel überwunden und die Kupplungsbeläge sind in Anlage gebracht, wobei ein weiteres Erhöhen des Drucks im hydraulischen Drucksystem unmittelbar eine Bereitstellung einer Drehmomentkapazität der Kupplung bewirken würde (also eine Übertragung eines Drehmoments z. B. von einer Antriebseinheit auf ein Getriebe über die Kupplung). Das Verfahren umfasst zumindest die folgenden Schritte:
a) Befüllen des Kupplungszylinders mit einer kontrollierten Drehzahl der Pumpe zur Förderung der hydraulischen Flüssigkeit in den Kupplungszylinder, bis ein Greifpunkt der Kupplung erreicht und überschritten ist und ein Motorstrom der Pumpe einen vorbestimmten Mindestwert erreicht hat;
b) Ermitteln eines mit der Pumpe bis zum Erreichen des Mindestwertes in den Kupplungszylinder geförderten ersten Volumens der hydraulischen Flüssigkeit auf Basis eines Verlaufs der kontrollierten Drehzahl in Schritt a);
c) Reduzieren des Wertes des ersten Volumens um einen vorbestimmten Betrag, so dass ein zweites Volumen bestimmt ist;
d) Verwenden des zweiten Volumens für Kupplungsvorgänge im Betrieb des Kraftfahrzeuges, wobei das zweite Volumen mit einer hohen Drehzahl der Pumpe in den Kupplungszylinder gefördert wird, so dass die Kupplung soweit befüllt ist, dass der Greifpunkt der Kupplung gerade noch nicht erreicht ist.

Eine für das beschriebene Verfahren geeignete Kupplung ist z. B. eine Boosterkupplung (HangOn, Kupplung sitzt an einer Seitenwelle):
- Volumen des Kupplungszylinders bis zum Greifpunkt: ca. 5,2 ml [Milliliter]
- Volumen des Kupplungszylinders bis zu 40 bar/1500 Nm [Newtonmeter]: ca. 8 ml (incl. Luftspiel)
- Luftspiel: ca. 0,7 mm [Millimeter]
- Max. Motordrehzahl der Pumpe: ca. 5000 rpm [Rounds per minute]
- Pumpvolumen pro Umdrehung: ca. 0,1 ml [Milliliter]

Ausgehend von einer drucklosen bzw. nicht befüllten Kupplung wird der Kupplungszylinder mit der hydraulischen Flüssigkeit befüllt, bis die Kupplungsbeläge miteinander in Anlage gebracht sind. Der Kupplungszylinder wird über den Greifpunkt weiter befüllt bis der (elektrische) Motorstrom der Pumpe einen vorbestimmten Mindestwert erreicht hat. Insbesondere beträgt der Mindestwert des (elektrischen) Motorstroms der Pumpe zwischen 8 und 16, bevorzugt zwischen 8 und 12 Ampere (z. B. am Ende von Schritt a)).

Bis zum Erreichen des Mindestwertes wird der Verlauf der Drehzahl der Pumpe überwacht und/oder aufgezeichnet, so dass das in den Kupplungszylinder beförderte erste Volumen genau berechnet werden kann (Schritt b)).

Aus Vorversuchen und/oder Berechnungen mit Kupplungen dieser Bauart kann bereits ein vorbestimmter Betrag ermittelt werden, der von dem ersten Volumen abgezogen wird, so dass ein zweites Volumen bestimmt ist (Schritt c)). Dieser vorbestimmte Betrag hängt von den verbauten Komponenten in der Kupplung ab und kann für eine Kupplung bestimmter Bauart z. B. in einem Testbetrieb (vor dem Verbau in einem Fahrzeug), für einen Fachmann auf diesem Gebiet problemlos, bestimmt werden.

Das zweite Volumen ist das Volumen, das über die Pumpe in den Kupplungszylinder gefördert wird, wobei dann der Greifpunkt der Kupplung gerade noch nicht erreicht ist (Schritt d)).

Wenn der Greifpunkt der Kupplung gerade noch nicht erreicht ist, kann sowohl noch ein Anfangsluftspiel zwischen den Kupplungsbelägen existieren, als auch eine (leichte) Anlage der Kupplungsbeläge bereits vorliegen, so dass schon ein geringes Drehmoment übertragen wird. Da - z. B. für das Synchronisieren - ein geringes Drehmoment benötigt wird, fährt die Kupplung direkt leicht über das Anfangsluftspiel hinaus, damit möglichst schnell dieses spezielle Drehmoment übertragen wird. Dieses Drehmoment hängt vom Anwendungsfall ab. Z. B. darf bei einer Synchronisierung das übertragene Drehmoment nicht höher als ein gewisser Wert sein, damit der Fahrer keinen Ruck spürt, sollte aber gleichzeitig hoch genug sein, damit die Synchronisierung schnell erfolgt.

Insbesondere kann das Verfahren durchgeführt werden, ohne dass ein Drucksensor eingesetzt wird, und ohne dass auf die ermittelten Werte eines Drucksensors zurückgegriffen werden müsste.

Bei dem vorliegenden Verfahren werden die Kupplungsbeläge über den Greifpunkt so zur Anlage gebracht, dass zumindest bei Erreichen des Mindestwertes (durch den Motorstrom) eine konstante Neigung der Drehmomentkennlinie der Kupplung vorliegt. Dieser Bereich einer konstanten Neigung der Drehmomentkennlinie wird als Regelbereich einer Kupplung bezeichnet. In diesem Regelbereich ist der Drehmomentgradient, d. h. die Neigung der Drehmomentkennlinie, praktisch nur von dem Reibwert zwischen den Kupplungsbelägen abhängig und somit weitgehend konstant. Aus diesem Grund kann durch den Motorstrom der Pumpe mit ausreichender Genauigkeit ein bestimmter Füllgrad des Kupplungszylinders ermittelt werden (erstes Volumen), bei dem ein bestimmter Druck in dem Kupplungszylinder vorliegt, bzw. bei dem ein bestimmtes Drehmoment übertragen wird. Damit lässt sich, durch den vorher ermittelten vorbestimmten Betrag, ein zweites Volumen bestimmen.

Dieses zweite Volumen kann nun für weitere Befüllvorgänge der Kupplung verwendet werden. Das zweite Volumen kann mit erhöhter Drehzahl der Pumpe in den Kupplungszylinder befördert werden, so dass eine schnelle Erreichung des Greifpunkts realisiert ist.

Gemäß einer besonders vorteilhaften Ausgestaltung des Verfahrens werden die Schritte a) bis c) bei einer ersten Inbetriebnahme der Kupplung durchgeführt, wobei die Kupplung und das hydraulische Drucksystem ohne Leckage betrieben werden. Damit kann ein Anfangs-Luftspiel der Kupplung ermittelt werden.

Erste Inbetriebnahme meint hier, dass die Kupplung nach der Verbindung mit einem hydraulischen Drucksystem und nach dem Verbau, z. B. in einem Kraftfahrzeug, erstmals kontrolliert mit Druck beaufschlagt wird. Insbesondere liegt hier also kein Betrieb des Kraftfahrzeuges vor, sondern z. B. ein End-of-line-Test (EOL-Test) in einem Montage- oder Werkstattbereich für Kraftfahrzeuge. Insbesondere werden hierzu die Kupplung, das Drucksystem und/oder das Kraftfahrzeug in einem Prüfbereich unter kontrollierten Bedingungen betrieben.

"Ohne Leckage" heißt insbesondere, dass das hydraulische Drucksystem unter kontrollierten Bedingungen betrieben wird, so dass eine Leckage während dieses Befüllens sicher verhindert ist. Im Betrieb eines Kraftfahrzeuges werden z. B. die einzelnen Komponenten eines Drucksystems über das elektronische Bordnetz mit Energie versorgt. Dabei öffnen z. B. Ventile, die in der Zuleitung der hydraulischen Flüssigkeit zwischen Kupplungszylinder und Pumpe angeordnet sind, ggf. nicht vollständig, so dass eine Leckage auftritt (die hydraulische Flüssigkeit wird also nicht vollständig in den Kupplungszylinder überführt). Unter kontrollierten Bedingungen werden nun alle Komponenten so betrieben und insbesondere werden Ventile so bestromt, dass ein leckagefreier Betrieb gewährleistet ist (also die Ventile z. B. vollständig geöffnet sind). Aus der Drehzahl der Pumpe kann das in den Kupplungszylinder bis zum Erreichen des vorbestimmten Mindestwertes geförderte erste Volumen dann genau ermittelt werden (Schritte a) und b)). Das durch den Schritt c) ermittelte zweite Volumen ergibt damit direkt das Anfangs-Luftspiel der Kupplung, also das Luftspiel, das bei einer Erst-Inbetriebnahme der Kupplung (ohne Verschleiß der Reibbeläge oder ähnliches) vorliegt.

Bevorzugt wird in Kenntnis des Anfangs-Luftspiels eine (aktuelle bzw. tatsächliche) Leckage der Kupplung im Betrieb des Kraftfahrzeugs für einen aktuellen Betriebspunkt ermittelt, umfassend die folgenden Prozesse:
i. Durchführen von Schritt a) bei einer ersten Inbetriebnahme der Kupplung, wobei die Kupplung und das hydraulische Drucksystem ohne eine Leckage betrieben werden und bei Erreichen und Halten des Mindestwerts des Motorstroms eine erste Drehzahl der Pumpe ermittelt wird;
ii. Durchführen von Schritt a) im Betrieb des Kraftfahrzeuges in einem (aktuellen bzw. tatsächlichen) Betriebspunkt, wobei bei Erreichen und Halten des Mindestwerts des Motorstroms eine zweite Drehzahl der Pumpe ermittelt wird und aus der Differenz von erster Drehzahl und zweiter Drehzahl die (aktuelle bzw. tatsächliche) Leckage der Kupplung für den (aktuellen bzw. tatsächlichen) Betriebspunkt ermittelt wird.

Die (aktuelle bzw. tatsächliche) Leckage in einem (aktuellen bzw. tatsächlichen) Betriebspunkt der Kupplung ist insbesondere abhängig von einem oder mehreren (aktuellen bzw. tatsächlichen) Parametern, z. B. der Temperatur der hydraulischen Flüssigkeit, Toleranzen der Ventile und der Ventilbohrungen, Toleranzen der Pumpe und - je nach hydraulischem System - Toleranzen einer Blende, die in dem Hydrauliksystem verbaut sein kann. Damit kann also die zum Zeitpunkt der Durchführung dieses Prozesses aktuell vorliegende Situation definiert werden. Die Leckage in anderen Betriebspunkten der Kupplung kann, ausgehend von dieser ersten ermittelten (aktuellen bzw. tatsächlichen) Leckage, auch rechnerisch ermittelt werden.

Insbesondere wird während des Betriebs des Kraftfahrzeugs ein Luftspiel der Kupplung ermittelt, umfassend die folgenden Prozesse:
iii. Ermittlung der Leckage der Kupplung bei einem vorliegenden Betriebspunkt gemäß der Prozesse i. und ii. (z. B. mittels Verwenden der bereits ermittelten Leckage und Berücksichtigung von Temperatur und anderen Parametern);
iv. Durchführen der Schritte a) bis c) im Betrieb des Kraftfahrzeuges und Ermitteln eines aktuellen zweiten Volumens;
v. Reduzieren des Wertes des aktuellen zweiten Volumens (das in einem bestimmten Zeitraum zugeführt wird), um die ermittelte Leckage der Kupplung (für den bestimmten Zeitraum), so dass aus der Differenz das Luftspiel ermittelt werden kann.

Damit kann also die zum Zeitpunkt der Durchführung dieses Prozesses aktuell vorliegende Situation des Luftspiels definiert werden, insbesondere wenn jeweils die aktuellen bzw. tatsächlichen Parameter ermittelt und/oder berücksichtigt werden.

Gemäß einer bevorzugten Ausgestaltung wird während des Betriebs des Kraftfahrzeugs oder in einem Nachlauf (also z. B. nach Abschalten einer Zündung des Kraftfahrzeuges) der (aktuelle) absolute Verschleiß der Kupplungsbeläge ermittelt; umfassend die folgenden Teilschritte:
1. Ermitteln des aktuellen Luftspiels gemäß Prozess v.;
2. Bilden der Differenz aus Anfangs-Luftspiel und gemäß Teilschritt 1. ermitteltem Luftspiel, wobei aus der Differenz der (aktuelle) absolute Verschleiß ermittelt wird.

Der absolute Verschleiß ist der Verschleiß/die Abnutzung der Kupplungsbeläge seit einer Erstinbetriebnahme der Kupplung, der zu einem aktuellen Zeitpunkt festgestellt wird.

Insbesondere wird während des Betriebs des Kraftfahrzeugs oder in einem Nachlauf der (aktuelle) absolute Verschleiß der Kupplungsbeläge ermittelt; umfassend die folgenden Unterschritte:
(1) Durchführen der Schritte a) und b) im Betrieb des Kraftfahrzeuges oder in einem Nachlauf in einem (aktuellen) Betriebspunkt und Ermitteln eines aktuellen ersten Volumens;
(2) Reduzieren des Wertes des aktuellen ersten Volumens um die (aktuelle) Leckage (siehe insbesondere die Verfahrensvariante mit den Prozessen i. und ii.) und Ermitteln eines korrigierten aktuellen ersten Volumens;
(3) Bilden einer Differenz aus dem korrigierten (aktuellen) ersten Volumen und dem ersten Volumen (das bei einer ersten Inbetriebnahme der Kupplung ohne Leckage ermittelt wurde), wobei aus der Differenz der (aktuelle) absolute Verschleiß der Kupplungsbeläge ermittelt wird.

Insbesondere wird während des Betriebs des Kraftfahrzeugs oder in einem Nachlauf der (aktuelle) relative Verschleiß der Kupplung ermittelt, umfassend die folgenden Schritte:
I. Durchführen der Schritte a) und b) im Betrieb des Kraftfahrzeuges oder in einem Nachlauf in einem ersten Betriebspunkt und Ermitteln eines relativen ersten Volumens; und danach
II. erneutes Durchführen der Schritte a) und b) im Betrieb des Kraftfahrzeuges oder in einem Nachlauf und Ermitteln eines späteren relativen ersten Volumens;
III. Bilden einer Differenz aus dem späteren relativen ersten Volumen und dem relativen ersten Volumen, wobei aus der Differenz der (aktuelle) relative Verschleiß der Kupplungsbeläge ermittelt wird.

Insbesondere kann so der Fortschritt des Verschleißes zu allen Zeitpunkten festgestellt werden. Damit kann der Verlauf des Verschleißes über die Betriebsdauer der Kupplung verfolgt werden und, falls ein bestimmter Verschleiß erreicht oder überschritten wurde, eine Mitteilung über eine Kontrolleinheit generiert werden, die auf den Zustand der Kupplung hinweist.

Insbesondere werden die Schritte a) und b) (ggf. auch c)) nach Abschalten einer Zündung des Kraftfahrzeuges durchgeführt, so dass bei der nachfolgenden Wiederinbetriebnahme des Kraftfahrzeuges ein aktueller Wert für das zweite Volumen vorliegt und die Kupplung unmittelbar mit Schritt d) betrieben werden kann.

Die Eingangs gestellten Aufgaben werden weiter durch ein Kraftfahrzeug mit einer Antriebseinheit, einem Getriebe und mindestens einer Kupplung gelöst, wobei die Kupplung eine Mehrzahl von Kupplungsbelägen und eine Kupplungsfeder aufweist und mit einem hydraulischen Drucksystem verbunden ist, das eine Pumpe, einen Kupplungszylinder und einen Kupplungskolben aufweist, wobei das hydraulische Drucksystem geeignet ist, über die Pumpe eine hydraulische Flüssigkeit in den Kupplungszylinder zu fördern und den Kupplungskolben zu bewegen, so dass die Kupplungsbeläge gegen eine Kraft der Kupplungsfeder miteinander zur Anlage gebracht werden. Das Kraftfahrzeug weist weiter eine Kontrolleinheit auf, die so eingerichtet und ausgestaltet ist, dass diese die Kupplung nach einem hier vorgeschlagenen Verfahren betreiben kann.

Es wird insbesondere vorgeschlagen, dass die Kontrolleinheit so eingerichtet und ausgestaltet ist, dass der Verschleiß der Kupplungsbeläge regelmäßig ermittelt und an die Kontrolleinheit übermittelt wird; wobei über die Kontrolleinheit zumindest der (aktuelle) absolute Verschleiß und/oder der (aktuelle) relative Verschleiß der Kupplungsbeläge abrufbar ist.

Die Erfindung und das technische Umfeld werden nachfolgend anhand der Figuren näher erläutert. Es ist darauf hinzuweisen, dass die Figuren besonders bevorzugte Ausführungsvarianten der Erfindung zeigen, auf die sie jedoch nicht beschränkt sind. Für gleiche Gegenstände werden in den Figuren auch gleiche Bezugszeichen verwendet. Es zeigen schematisch:
- Fig. 1:: ein Kraftfahrzeug mit einer Kupplung;
- Fig. 2:: ein Diagramm zur Verdeutlichung der Erfindung;
- Fig. 3:: ein weiteres Diagramm zur Verdeutlichung der möglichen Bestimmung des absoluten Verschleißes; und
- Fig. 4:: ein Diagramm zur Verdeutlichung der möglichen Bestimmung des relativen Verschleißes.

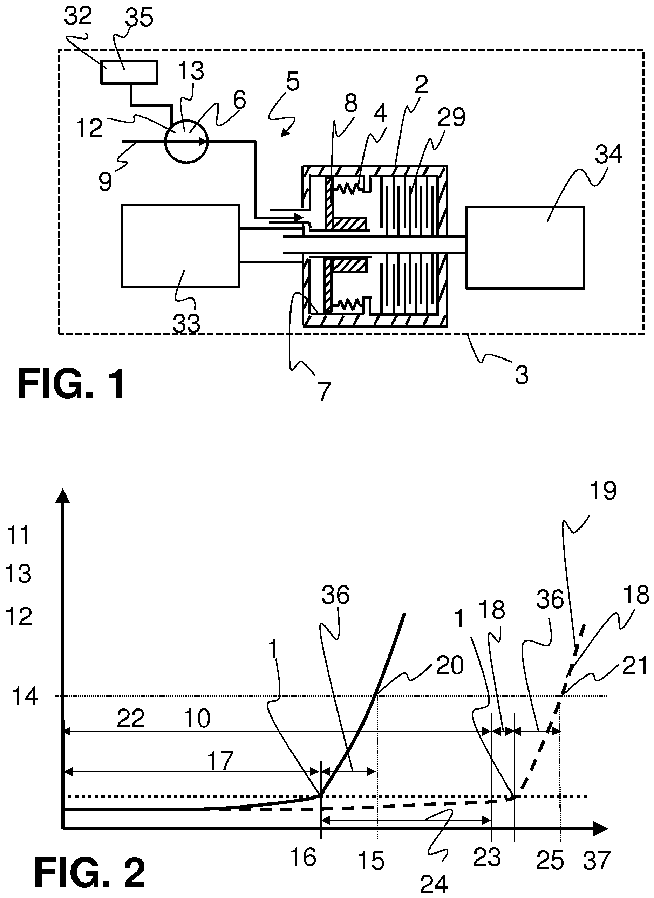

Fig. 1 zeigt ein Kraftfahrzeug 3 mit einer Antriebseinheit 33, einem Getriebe 34 und einer (einzelnen) Kupplung 2. Die Kupplung 2 weist eine Mehrzahl von Kupplungsbelägen 29 und eine Kupplungsfeder 4 auf und ist mit einem hydraulischen Drucksystem 5 verbunden, das zumindest eine Pumpe 6, einen Kupplungszylinder 7 und einen Kupplungskolben 8 aufweist, wobei das hydraulische Drucksystem 5 geeignet ist, über die Pumpe 6 eine hydraulische Flüssigkeit 9 in den Kupplungszylinder 7 zu fördern und den Kupplungskolben 8 zu bewegen, so dass die Kupplungsbeläge 29 gegen eine Kraft der Kupplungsfeder 4 miteinander zur Anlage gebracht werden. Sind die Kupplungsbeläge 29 zur Anlage miteinander gebracht, kann ein Drehmoment der Antriebseinheit 33 auf das Getriebe 34 übertragen werden.

Das hydraulische Drucksystem 5 ist mit einer Kontrolleinheit 35 verbunden. Die Kontrolleinheit 35 regelt und überwacht Drehzahl 12 und Motorstrom 13 der Pumpe 6, bzw. des Motors, der die Pumpe 6 antreibt. Der geforderte Druck 11 in der Kupplung 2 wird durch die Kontrolleinheit 35 eingestellt. Das Kraftfahrzeug 3 umfasst weiter eine Zündung 32, die hier mit der Kontrolleinheit 35 verbunden ist.

Über die Zündung 32 wird die Antriebseinheit 33 (z. B. eine Verbrennungskraftmaschine) ein- und ausgeschaltet.

Fig. 2 zeigt ein Diagramm zur Verdeutlichung der Erfindung. In dem Diagramm ist der Verlauf des Drehmoments (proportional zu Druck 11 und Motorstrom 13) entlang der Ordinate über dem Befüllgrad bzw. dem befüllten Volumen 37 der Kupplung 2 entlang der Abszisse aufgetragen. Zu erkennen ist, dass nach Erreichen des Greifpunkts 1 der Drehmomentgradient (die Neigung der Kurve) nahezu konstant ist. Zu erkennen ist weiterhin, dass bei einem zweiten Volumen 16, 23 das Luftspiel 10, 17, 22 der Kupplung 2 überwunden ist und die Kupplungsbeläge 29 in Anlage gebracht sind. Ab diesem Punkt steigt die Kurve steil an (also die Werte für Motorstrom 13, Drehmoment und Druck 11). Ein weiteres Erhöhen des Drucks 11 im Drucksystem 5 über den Greifpunkt 1 hinaus würde dann unmittelbar eine Bereitstellung eines Drehmoments der Kupplung 2 bewirken, d. h. die Kupplung 2 würde ein Drehmoment einer Antriebseinheit 33 auf ein Getriebe 34 übertragen.

In Fig. 2 ist für eine Kupplung 2 die Veränderung des Luftspiels 10 durch Verschleiß verdeutlicht. Dabei werden die Schritte a) bis c) bei einer ersten Inbetriebnahme der Kupplung 2 durchgeführt, wobei die Kupplung 2 und das hydraulische Drucksystem 5 ohne Leckage betrieben werden. Damit kann ein Anfangs-Luftspiel 17 der Kupplung 2 ermittelt werden. Der Kupplungszylinder 7 wird mit einer kontrollierten Drehzahl 12 der Pumpe 6 zur Förderung der hydraulischen Flüssigkeit 9 in den Kupplungszylinder 7 gefüllt, bis der Greifpunkt 1 der Kupplung 2 erreicht und überschritten ist und ein Motorstrom 13 der Pumpe 6 einen vorbestimmten Mindestwert 14 erreicht hat (Schritt a)). Auf Basis des Verlaufs der kontrollierten Drehzahl 12 in Schritt a) wird ein, mit der Pumpe 6 bis zum Erreichen des Mindestwertes 14 in den Kupplungszylinder 7 gefördertes erstes Volumen 15 der hydraulischen Flüssigkeit 9 ermittelt (Schritt b)). Dieser Wert des ersten Volumens 15 wird um einen vorbestimmten Betrag 36 reduziert, so dass ein zweites Volumen 16 bestimmt ist (Schritt c)). Das zweite Volumen 16 entspricht dem Anfangs-Luftspiel 17, unmittelbar vor dem Erreichen des Greifpunktes 1.

In Kenntnis des Anfangs-Luftspiels 17 kann eine aktuelle Leckage 18 der Kupplung 2 im Betrieb des Kraftfahrzeugs 3 für einen aktuellen Betriebspunkt 19 ermittelt werden. Dazu wird in einem Schritt i. der Schritt a) durchgeführt bei einer ersten Inbetriebnahme der Kupplung 2, wobei die Kupplung 2 und das hydraulische Drucksystem 5 ohne eine Leckage betrieben werden, wobei bei Erreichen und Halten des Mindestwerts 14 des Motorstroms 13 eine erste Drehzahl 20 der Pumpe 6 ermittelt wird. Nachfolgend wird in einem Prozess ii. der Schritt a) im Betrieb des Kraftfahrzeuges 3 in einem aktuellen Betriebspunkt 19 durchgeführt, wobei bei Erreichen und Halten des Mindestwerts 14 des Motorstroms 13 eine zweite Drehzahl 21 der Pumpe 6 ermittelt wird, wobei aus der Differenz von erster Drehzahl 20 und zweiter Drehzahl 21 die aktuelle Leckage 18 der Kupplung 2 für den aktuellen Betriebspunkt 19 ermittelt wird.

Weiterhin kann während des Betriebs des Kraftfahrzeugs 3 ein aktuelles Luftspiel 22 der Kupplung 2 ermittelt werden, wobei in einem Prozess iii. die aktuellen Leckage 18 der Kupplung 2 bei einem vorliegenden aktuellen Betriebspunkt 19 gemäß der Prozesse i. und ii. (entweder Verwenden der bereits ermittelten aktuellen Leckage und ggf. Berücksichtigung von Temperatur und anderen Parametern oder Neuberechnung der aktuellen Leckage 18) ermittelt wird. In einem weiteren Prozess iv. werden die Schritte a) bis c) im Betrieb des Kraftfahrzeuges 3 durchgeführt und ein aktuelles zweites Volumen 23 ermittelt. In einem Prozess v. wird der Wert des aktuellen zweiten Volumens 23 (das in einem bestimmten Zeitraum zugeführt wird) um die ermittelte aktuelle Leckage 18 der Kupplung 2 (für den bestimmten Zeitraum) reduziert, so dass aus der Differenz das aktuelle Luftspiel 22 ermittelt werden kann.

Während des Betriebs des Kraftfahrzeugs 3 oder in einem Nachlauf wird der aktuelle absolute Verschleiß 24 der Kupplungsbeläge 29 ermittelt, wobei in einem Schritt 1. das aktuelle Luftspiel 22 gemäß Schritt v. ermittelt wird. In einem weiteren Schritt 2. wird aus dem Anfangs-Luftspiel 17 und dem aktuellem Luftspiel 22 eine Differenz gebildet, wobei aus der Differenz der aktuelle absolute Verschleiß 24 ermittelt wird.

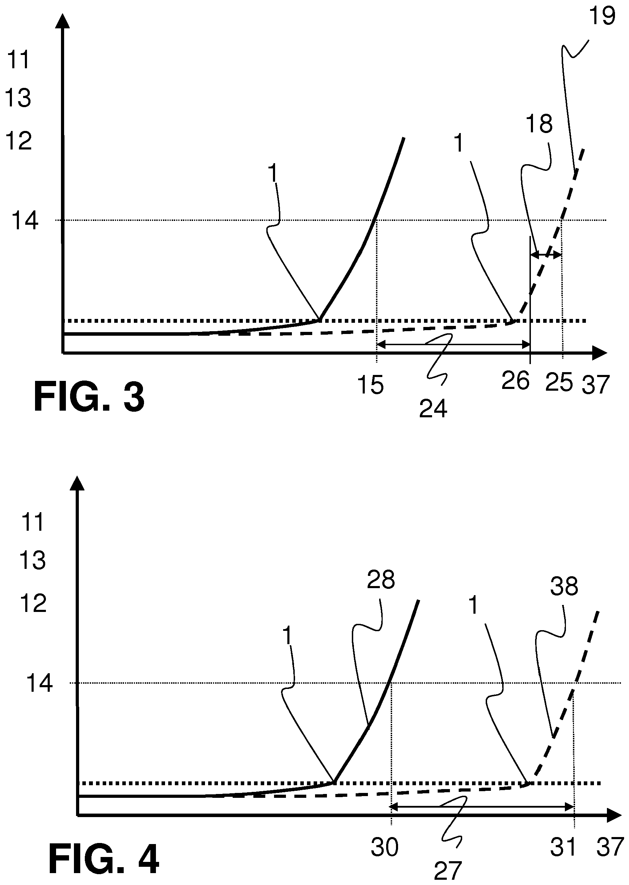

In Fig. 3 ist gezeigt, dass der aktuelle absolute Verschleiß 24 der Kupplungsbeläge 29 auch anders bestimmt werden kann. In einem Unterschritt (1) werden die Schritte a) und b) im Betrieb des Kraftfahrzeuges 3 oder in einem Nachlauf in einem aktuellen Betriebspunkt 19 durchgeführt und ein aktuelles erstes Volumen 25 ermittelt. In einem weiteren Unterschritt (2) wird der Wert des aktuellen ersten Volumens 25 um die aktuelle Leckage 18 reduziert und ein korrigiertes aktuelles erstes Volumen 26 ermittelt. In einem Unterschritt (3) wird die Differenz aus dem korrigierten aktuellen ersten Volumen 26 und dem ersten Volumen 15 (das bei einer ersten Inbetriebnahme der Kupplung 2 ohne Leckage ermittelt wurde) gebildet, wobei aus der Differenz der aktuelle absolute Verschleiß 24 der Kupplungsbeläge 29 ermittelt wird.

In Fig. 4 ist gezeigt, dass der aktuelle relative Verschleiß 27 der Kupplung 2 während des Betriebs des Kraftfahrzeugs 3 oder in einem Nachlauf ermittelt wird. Dabei werden in einem Ablauf I. die Schritte a) und b) im Betrieb des Kraftfahrzeuges 3 oder in einem Nachlauf in einem ersten Betriebspunkt 28 durchgeführt und ein relatives erstes Volumen 30 ermittelt. Danach werden in einem Ablauf II. in einem zweiten Betriebspunkt 38 erneut die Schritte a) und b) im Betrieb des Kraftfahrzeuges 3 oder in einem Nachlauf durchgeführt und ein späteres relatives erstes Volumen 31 ermittelt. In einem Ablauf III. wird eine Differenz aus dem späteren relativen ersten Volumen 31 und dem relativen ersten Volumen 30 gebildet, wobei aus der Differenz der aktuelle relative Verschleiß 27 der Kupplungsbeläge 29 ermittelt wird.

### Bezugszeichenliste

- 1: Greifpunkt
- 2: Kupplung
- 3: Kraftfahrzeug
- 4: Kupplungsfeder
- 5: Drucksystem
- 6: Pumpe
- 7: Kupplungszylinder
- 8: Kupplungskolben
- 9: hydraulische Flüssigkeit
- 10: Luftspiel
- 11: Druck
- 12: kontrollierte Drehzahl
- 13: Motorstrom
- 14: Mindestwert
- 15: erstes Volumen
- 16: zweites Volumen
- 17: Anfangs-Luftspiel
- 18: (aktuelle) Leckage
- 19: (aktueller) Betriebspunkt
- 20: erste Drehzahl
- 21: zweite Drehzahl
- 22: (aktuelles) Luftspiel
- 23: (aktuelles) zweites Volumen
- 24: (aktueller) absoluter Verschleiß
- 25: (aktuelles) erstes Volumen
- 26: korrigiertes (aktuelles) erstes Volumen
- 27: (aktueller) relativer Verschleiß
- 28: erster Betriebspunkt
- 29: Kupplungsbelag
- 30: relatives erstes Volumen
- 31: späteres relatives erstes Volumen
- 32: Zündung
- 33: Antriebseinheit
- 34: Getriebe
- 35: Kontrolleinheit
- 36: Vorbestimmter Betrag
- 37: Volumen
- 38: zweiter Betriebspunkt

## Patentansprüche

1. Verfahren zum Betrieb einer Kupplung (2) eines Kraftfahrzeugs (3), wobei die Kupplung (2) eine Mehrzahl von Kupplungsbelägen (29) und eine Kupplungsfeder (4) aufweist und mit einem hydraulischen Drucksystem (5) verbunden ist, das eine Pumpe (6), einen Kupplungszylinder (7) und einen Kupplungskolben (8) aufweist, wobei das hydraulische Drucksystem (5) geeignet ist, über die Pumpe (6) eine hydraulische Flüssigkeit (9) in den Kupplungszylinder (7) zu fördern und den Kupplungskolben (8) zu bewegen, so dass die Kupplungsbeläge (29) gegen eine Kraft der Kupplungsfeder (4) miteinander zur Anlage gebracht werden, wobei in dem Greifpunkt (1) der Kupplung (2) ein Luftspiel (10) überwunden ist und die Kupplungsbeläge (29) in Anlage gebracht sind und ein weiteres Erhöhen eines Drucks (11) im Drucksystem (5) unmittelbar eine Bereitstellung einer Drehmomentkapazität der Kupplung (2) bewirken würde, **gekennzeichnet durch** zumindest die folgenden Schritte:
a) Befallen des Kupplungszylinders (7) mit einer kontrollierten Drehzahl (12) der Pumpe (6) zur Förderung der hydraulischen Flüssigkeit (9) in den Kupplungszylinder (7) bis ein Greifpunkt (1) der Kupplung (2) erreicht und überschritten ist und ein Motorstrom (13) der Pumpe (6) einen vorbestimmten Mindestwert (14) erreicht hat;
b) Ermitteln eines mit der Pumpe (6) bis zum Erreichen des Mindestwertes (14) in den Kupplungszylinder (7) geförderten ersten Volumens (15) der hydraulischen Flüssigkeit (9) auf Basis eines Verlaufs der kontrollierten Drehzahl (12) in Schritt a)
c) Reduzieren des Wertes des ersten Volumens (15) um einen vorbestimmten Betrag (36), so dass ein zweites Volumen (16) bestimmt ist;
d) Verwenden des zweiten Volumens (16) für Kupplungsvorgänge im Betrieb des Kraftfahrzeuges (3), wobei das zweite Volumen (16) mit einer hohen Drehzahl (12) der Pumpe (6) in den Kupplungszylinder (7) gefördert wird, so dass die Kupplung (2) soweit befüllt ist, dass der Greifpunkt (1) der Kupplung (2) gerade noch nicht erreicht ist.

2. Verfahren nach Patentanspruch 1, wobei die Schritte a) bis c) bei einer ersten Inbetriebnahme der Kupplung (2) durchgeführt und die Kupplung (2) und das hydraulische Drucksystem (5) ohne Leckage betrieben werden und damit ein Anfangs-Luftspiel (17) der Kupplung (2) ermittelt wird.

3. Verfahren nach Patentanspruch 2, wobei in Kenntnis des Anfangs-Luftspiels (17) eine Leckage (18) der Kupplung (2) im Betrieb des Kraftfahrzeugs (3) für einen Betriebspunkt (19) ermittelt wird, umfassend die folgenden Prozesse:
i. Durchführen von Schritt a) bei einer ersten Inbetriebnahme der Kupplung (2), wobei die Kupplung (2) und das hydraulische Drucksystem (5) ohne eine Leckage betrieben werden und bei Erreichen und Halten des Mindestwerts (14) des Motorstroms (13) eine erste Drehzahl (20) der Pumpe (6) ermittelt wird;
ii. Durchführen von Schritt a) im Betrieb des Kraftfahrzeuges (3) in einem Betriebspunkt (19), wobei bei Erreichen und Halten des Mindestwerts (14) des Motorstroms (13) eine zweite Drehzahl (21) der Pumpe (6) ermittelt wird, wobei aus der Differenz von erster Drehzahl (20) und zweiter Drehzahl (21) die Leckage (18) der Kupplung (2) für den Betriebspunkt (19) ermittelt wird.

4. Verfahren nach Patentanspruch 3, wobei während des Betriebs des Kraftfahrzeugs (3) ein Luftspiel (22) der Kupplung (2) ermittelt wird, umfassend die folgenden Prozesse:
iii. Ermittlung der Leckage (18) der Kupplung (2) bei einem vorliegenden Betriebspunkt (19) gemäß der Schritte i. und ii.;
iv. Durchführen der Schritte a) bis c) im Betrieb des Kraftfahrzeuges (3) und Ermitteln eines zweiten Volumens (23);
v. Reduzieren des Wertes des zweiten Volumens (23) um die ermittelte aktuelle Leckage (18) der Kupplung (2), so dass aus der Differenz das Luftspiel (22) ermittelt werden kann.

5. Verfahren nach Patentanspruch 4, wobei während des Betriebs des Kraftfahrzeugs (3) oder in einem Nachlauf der absolute Verschleiß (24) der Kupplungsbeläge (29) ermittelt wird; umfassend die folgenden Teilschritte:
1. Ermitteln des Luftspiels (22) gemäß Prozess v.;
2. Bilden der Differenz aus Anfangs-Luftspiel (17) und gemäß Teilschritt 1. ermitteltem Luftspiel (22), wobei aus der Differenz der absolute Verschleiß (24) ermittelt wird.

6. Verfahren nach Patentanspruch 3, wobei während des Betriebs des Kraftfahrzeugs (3) oder in einem Nachlauf der absolute Verschleiß (24) der Kupplungsbeläge (29) ermittelt wird; umfassend die folgenden Unterschritte:
(1) Durchführen der Schritte a) und b) im Betrieb des Kraftfahrzeuges (3) oder in einem Nachlauf in einem Betriebspunkt (19) und Ermitteln eines ersten Volumens (25);
(2) Reduzieren des Wertes des ersten Volumens (25) um die Leckage (18) und Ermitteln eines korrigierten ersten Volumens (26);
(3) Bilden einer Differenz aus dem korrigierten ersten Volumen (26) und dem ersten Volumen (15), wobei aus der Differenz der absolute Verschleiß (24) der Kupplungsbeläge (29) ermittelt wird.

7. Verfahren nach Patentanspruch 1, wobei während des Betriebs des Kraftfahrzeugs (3) oder in einem Nachlauf der relative Verschleiß (27) der Kupplung (2) ermittelt wird, umfassend die folgenden Abläufe:
I. Durchführen der Schritte a) und b) im Betrieb des Kraftfahrzeuges (3) oder in einem Nachlauf in einem ersten Betriebspunkt (28) und Ermitteln eines relativen ersten Volumens (30);
II. danach erneutes Durchführen der Schritte a) und b) im Betrieb des Kraftfahrzeuges (3) oder in einem Nachlauf und Ermitteln eines späteren relativen ersten Volumens (31);
III. Bilden einer Differenz aus dem späteren relativen ersten Volumen (31) und dem relativen ersten Volumen (30), wobei aus der Differenz der relative Verschleiß (27) der Kupplungsbeläge (29) ermittelt wird.

8. Verfahren nach einem der vorhergehenden Patentansprüche, wobei die Schritte a) und b) nach Abschalten einer Zündung (32) des Kraftfahrzeuges (3) durchgeführt werden, so dass bei der nachfolgenden Wiederinbetriebnahme des Kraftfahrzeuges (3) ein aktueller Wert für das zweite Volumen (16) vorliegt und die Kupplung (2) unmittelbar mit Schritt d) betrieben werden kann.

9. Kraftfahrzeug (3) mit einer Antriebseinheit (33), einem Getriebe (34) und mindestens einer Kupplung (2), wobei die Kupplung (2) eine Mehrzahl von Kupplungsbelägen (29) und eine Kupplungsfeder (4) aufweist und mit einem hydraulischen Drucksystem (5) verbunden ist, das eine Pumpe (6), einen Kupplungszylinder (7) und einen Kupplungskolben (8) aufweist, wobei das hydraulische Drucksystem (5) geeignet ist, über die Pumpe (6) eine hydraulische Flüssigkeit (9) in den Kupplungszylinder (7) zu fördern und den Kupplungskolben (8) zu bewegen, so dass die Kupplungsbeläge (29) gegen eine Kraft der Kupplungsfeder (4) miteinander zur Anlage gebracht werden; **dadurch gekennzeichnet, dass** das Kraftfahrzeug (3) eine Kontrolleinheit (35) aufweist, die so eingerichtet und ausgestaltet ist, dass diese die Kupplung (2) nach einem Verfahren gemäß einem der vorhergehenden Patentansprüche betreiben kann.

10. Kraftfahrzeug (3) nach Patentanspruch 9, wobei die Kontrolleinheit (35) so eingerichtet und ausgestaltet ist, dass der Verschleiß der Kupplungsbeläge (29) regelmäßig ermittelt und an die Kontrolleinheit (35) übermittelt wird; wobei über die Kontrolleinheit (35) zumindest der absolute Verschleiß (24) der Kupplungsbeläge (29) abrufbar ist.

## Claims

1. Method for operating a clutch (2) of a motor vehicle (3), the clutch (2) having a plurality of clutch linings (29) and a clutch spring (4) and being connected to a hydraulic pressure system (5) which has a pump (6), a clutch cylinder (7) and a clutch piston (8), the hydraulic pressure system (5) being suitable for delivering a hydraulic fluid (9) into the clutch cylinder (7) via the pump (6) and for moving the clutch piston (8), with the result that the clutch linings (29) are brought into contact with one another counter to a force of the clutch spring (4), an air gap (10) being overcome at the grip point (1) of the clutch (2) and the clutch linings (29) being brought into contact; and a further increase in a pressure (11) in the pressure system (5) would directly bring about a provision of a torque capacity of the clutch (2), **characterized by** at least the following steps:
a) filling of the clutch cylinder (7) at a controlled rotational speed (12) of the pump (6) in order to deliver the hydraulic fluid (9) into the clutch cylinder (7) until a grip point (1) of the clutch (2) is reached and exceeded and a motor current (13) of the pump (6) has reached a predefined minimum value (14);
b) determining of a first volume (15) of the hydraulic fluid (9) which is delivered into the clutch cylinder (7) by way of the pump (6) until the minimum value (14) is reached, on the basis of a profile of the controlled rotational speed (12) in step a);
c) reducing of the value of the first volume (15) by a predefined magnitude (36), with the result that a second volume (16) is defined;
d) use of the second volume (16) for clutch operations during operation of the motor vehicle (3), the second volume (16) being delivered into the clutch cylinder (7) at a high rotational speed (12) of the pump (6), with the result that the clutch (2) is filled to such an extent that the grip point (1) of the clutch (2) is not quite yet reached.

2. Method according to Claim 1, steps a) to c) being carried out during initial commissioning of the clutch (2), and the clutch (2) and the hydraulic pressure system (5) being operated without leakage and an initial air gap (17) of the clutch (2) being determined in this way.

3. Method according to Claim 2, a leakage (18) of the clutch (2) during operation of the motor vehicle (3) being determined for an operating point (19) in the knowledge of the initial air gap (17), comprising the following process:
i. carrying out of step a) during initial commissioning of the clutch (2), the clutch (2) and the hydraulic pressure system (5) being operated without a leakage and, when the minimum value (14) of the motor current (13) is reached and held, a first rotational speed (20) of the pump (6) being determined;
ii. carrying out of step a) during operation of the motor vehicle (3) at an operating point (19), a second rotational speed (21) of the pump (6) being determined when the minimum value (14) of the motor current (13) is reached and held, the leakage (18) of the clutch (2) being determined for the operating point (19) from the difference of the first rotational speed (20) and the second rotational speed (21).

4. Method according to Claim 3, an air gap (22) of the clutch (2) being determined during the operation of the motor vehicle (3), comprising the following processes:
iii. determining of the leakage (18) of the clutch (2) at a present operating point (19) in accordance with steps i. und ii.;
iv. carrying out of steps a) to c) during operation of the motor vehicle (3), and determining of a second volume (23);
v. reducing of the value of the second volume (23) by the determined current leakage (18) of the clutch (2), with the result that the air gap (22) can be determined from the difference.

5. Method according to Claim 4, the absolute wear (24) of the clutch linings (29) being determined during the operation of the motor vehicle (3) or during a follow-up time; comprising the following part steps:
1. determining of the air gap (22) in accordance with process v.;
2. forming of the difference of the initial air gap (17) and the air gap (22) which is determined in accordance with part step 1., the absolute wear (24) being determined from the difference.

6. Method according to Claim 3, the absolute wear (24) of the clutch linings (29) being determined during the operation of the motor vehicle (3) or during a follow-up time; comprising the following sub-steps:
(1) carrying out of steps a) and b) during operation of the motor vehicle (3) or during a follow-up time at an operating point (19), and determining of a first volume (25);
(2) reducing of the value of the first volume (25) by the leakage (18), and determining of a corrected first volume (26);
(3) forming of a difference of the corrected first volume (26) and the first volume (15), the absolute wear (24) of the clutch linings (29) being determined from the difference.

7. Method according to Claim 1, the relative wear (27) of the clutch (2) being determined during the operation of the motor vehicle (3) or during a follow-up time, comprising the following operations:
I. carrying out of steps a) and b) during operation of the motor vehicle (3) or during a follow-up time at a first operating point (28), and determining of a relative first volume (30);
II. subsequently, renewed carrying out of steps a) and b) during operation of the motor vehicle (3) or during a follow-up time, and determining of a subsequent relative first volume (31);
III. forming of a difference of the subsequent relative first volume (31) and the relative first volume (30), the relative wear (27) of the clutch linings (29) being determined from the difference.

8. Method according to one of the preceding claims, steps a) and b) being carried out after an ignition (32) of the motor vehicle (3) is switched off, with the result that, during the subsequent renewed commissioning of the motor vehicle (3), there is a current value for the second volume (16) and the clutch (2) can be operated directly by way of step d).

9. Motor vehicle (3) having a drive unit (33), a transmission (34) and at least one clutch (2), the clutch (2) having a plurality of clutch linings (29) and a clutch spring (4) and being connected to a hydraulic pressure system (5) which has a pump (6), a clutch cylinder (7) and a clutch piston (8), the hydraulic pressure system (5) being suitable for delivering a hydraulic fluid (9) into the clutch cylinder (7) via the pump (6) and for moving the clutch piston (8), with the result that the clutch linings (29) are brought into contact with one another counter to a force of the clutch spring (4); **characterized in that** the motor vehicle (3) has a control unit (35) which is set up and configured in such a way that it can operate the clutch (2) in accordance with a method according to one of the preceding claims.

10. Motor vehicle (3) according to Claim 9, the control unit (35) being set up and configured in such a way that the wear of the clutch linings (29) is determined regularly and is transmitted to the control unit (35); it being possible for at least the absolute wear (24) of the clutch linings (29) to be called up via the control unit (35).

## Revendications

1. Procédé permettant de faire fonctionner un embrayage (2) d'un véhicule automobile (3), dans lequel l'embrayage (2) présente une multiplicité de garnitures d'embrayage (29) et un ressort d'embrayage (4) et est relié à un système de pression hydraulique (5), qui présente une pompe (6), un cylindre d'embrayage (7) et un piston d'embrayage (8), dans lequel le système de pression hydraulique (5) est apte à transporter au moyen de la pompe (6) un liquide hydraulique (9) dans le cylindre d'embrayage (7) et de déplacer le piston d'embrayage (8), de telle manière que les garnitures d'embrayage (29) soient amenées en appui l'une sur l'autre contre une force du ressort d'embrayage (4), dans lequel au point de contact (1) de l'embrayage (2) un jeu (10) est surmonté et les garnitures d'embrayage (29) sont amenées en appui, et une nouvelle augmentation d'une pression (11) dans le système de pression (5) provoquerait immédiatement une mise à disposition d'une capacité de couple de l'embrayage (2), caractérisé au moins par les étapes suivantes:
a) remplissage du cylindre d'embrayage (7) avec un nombre de tours contrôlé (12) de la pompe (6) pour le transport du liquide hydraulique (9) dans le cylindre d'embrayage (7) jusqu'à ce qu'un point de contact (1) de l'embrayage (2) soit atteint et dépassé et qu'un courant de moteur (13) de la pompe (6) ait atteint une valeur minimale prédéterminée (14);
b) détermination d'un premier volume (15) du liquide hydraulique (9) transporté avec la pompe (6) dans le cylindre d'embrayage (7) jusqu'à atteindre la valeur minimale (14) sur la base d'une allure du nombre de tours contrôlé (12) à l'étape a);
c) réduction de la valeur du premier volume (15) d'une quantité prédéterminée (36), de telle manière qu'un deuxième volume (16) soit déterminé;
d) utilisation du deuxième volume (16) pour des opérations d'embrayage en fonctionnement du véhicule automobile (3), dans lequel on transporte le deuxième volume (16) dans le cylindre d'embrayage (7) avec un nombre de tours élevé (12) de la pompe (6), de telle manière que l'embrayage (2) soit rempli dans la mesure où le point de contact (1) de l'embrayage (2) n'est précisément pas encore atteint.

2. Procédé selon la revendication 1, dans lequel on exécute les étapes a) à c) lors d'une première mise en service de l'embrayage (2) et on fait fonctionner l'embrayage (2) et le système de pression hydraulique (5) sans fuite et on détermine ainsi un jeu initial (17) de l'embrayage (2).

3. Procédé selon la revendication 2, dans lequel, connaissant le jeu initial (17), on détermine une fuite (18) de l'embrayage (2) en fonctionnement du véhicule automobile (3) pour un point de fonctionnement (19), comprenant les opérations suivantes:
i. exécuter l'étape a) lors d'une première mise en service de l'embrayage (2), dans lequel on fait fonctionner l'embrayage (2) et le système de pression hydraulique (5) sans fuite et on détermine un premier nombre de tours (20) de la pompe (6) lorsque l'on atteint et maintient la valeur minimale (14) du courant de moteur (13);
ii. exécuter l'étape a) en fonctionnement du véhicule automobile (3) en un point de fonctionnement (19), dans lequel on détermine un deuxième nombre de tours (21) de la pompe (6) lorsque l'on atteint et maintient la valeur minimale (14) du courant de moteur (13), dans lequel on détermine, à partir de la différence entre le premier nombre de tours (20) et le deuxième nombre de tours (21), la fuite (18) de l'embrayage (2) pour le point de fonctionnement (19).

4. Procédé selon la revendication 3, dans lequel on détermine un jeu (22) de l'embrayage (2) en fonctionnement du véhicule automobile (3), comprenant les opérations suivantes:
iii. déterminer la fuite (18) de l'embrayage (2) en un point de fonctionnement actuel (19) selon les étapes i. et ii.;
iv. exécuter les étapes a) à c) en fonctionnement du véhicule automobile (3) et déterminer un deuxième volume (23);
v. réduire la valeur du deuxième volume (23) de la fuite actuelle déterminée (18) de l'embrayage (2), de telle manière que le jeu (22) puisse être déterminé à partir de la différence.

5. Procédé selon la revendication 4, dans lequel on détermine, en fonctionnement du véhicule automobile (3) ou lors d'une marche à vide, l'usure absolue (24) des garnitures d'embrayage (29), comprenant les étapes partielles suivantes:
1. déterminer le jeu (22) selon l'opération v.;
2. former la différence entre le jeu initial (17) et le jeu (22) déterminé selon l'étape partielle 1., dans lequel on détermine l'usure absolue (24) à partir de la différence.

6. Procédé selon la revendication 3, dans lequel on détermine, en fonctionnement du véhicule automobile (3) ou lors d'une marche à vide, l'usure absolue (24) des garnitures d'embrayage (29), comprenant les sous-étapes suivantes:
(1) exécuter les étapes a) et b) en fonctionnement du véhicule automobile (3) ou lors d'une marche à vide en un point de fonctionnement (19) et déterminer un premier volume (25) ;
(2) réduire la valeur du premier volume (25) de la fuite (18) et déterminer un premier volume corrigé (26);
(3) former une différence entre le premier volume corrigé (26) et le premier volume (15), dans lequel on détermine l'usure absolue (24) des garnitures d'embrayage (29) à partir de la différence.

7. Procédé selon la revendication 1, dans lequel on détermine, en fonctionnement du véhicule (3) ou lors d'une marche à vide, l'usure relative (27) de l'embrayage (2), comprenant les opérations suivantes:
I. exécuter les étapes a) et b) en fonctionnement du véhicule automobile (3) ou lors d'une marche à vide en un premier point de fonctionnement (28) et déterminer un premier volume relatif (30);
II. ensuite, exécuter de nouveau les étapes a) et b) en fonctionnement du véhicule automobile (3) ou lors d'une marche à vide et déterminer un premier volume relatif ultérieur (31);
III. former une différence entre le premier volume relatif ultérieur (31) et le premier volume relatif (30) dans lequel on détermine l'usure relative (27) des garnitures d'embrayage (29) à partir de la différence.

8. Procédé selon l'une quelconque des revendications précédentes, dans lequel on exécute les étapes (a) et b) après coupure d'un allumage (32) du véhicule automobile (3), de telle manière que lors d'une nouvelle mise en marche suivante du véhicule automobile (3) il existe une valeur actuelle pour le deuxième volume (16) et l'embrayage (2) peut fonctionner immédiatement avec l'étape d).

9. Véhicule automobile (3) avec une unité d'entraînement (33), une boîte de vitesses (34) et au moins un embrayage (2), dans lequel l'embrayage (2) présente une multiplicité de garnitures d'embrayage (29) et un ressort d'embrayage (4) et est relié à un système de pression hydraulique (5), qui présente une pompe (6), un cylindre d'embrayage (7) et un piston d'embrayage (8), dans lequel le système de pression hydraulique (5) est apte à transporter au moyen de la pompe (6) un liquide hydraulique (9) dans le cylindre d'embrayage (7) et de déplacer le piston d'embrayage (8), de telle manière que les garnitures d'embrayage (29) soient amenées en appui l'une sur l'autre contre une force du ressort d'embrayage (4), **caractérisé en ce que** le véhicule automobile (3) présente une unité de contrôle (35), qui est conçue et configurée de telle manière qu'elle puisse faire fonctionner l'embrayage (2) suivant un procédé selon l'une quelconque des revendications précédentes.

10. Véhicule automobile (3) selon la revendication 9, dans lequel l'unité de contrôle (35) est conçue et configurée de telle manière que l'usure des garnitures d'embrayage (29) soit régulièrement déterminée et communiquée à l'unité de contrôle (35), dans lequel au moins l'usure absolue (24) des garnitures d'embrayage (29) peut être appelée par l'unité de contrôle (35).
